# FASCICULE DE BREVET EUROPEEN

(11) **EP 2 334 408 B1**
(45) Date de publication et mention de la délivrance du brevet: **19.07.2017**
(21) Numéro de dépôt: 09817288.5
(22) Date de dépôt: 28.09.2009
(51) Int. Cl.: B01D 53/86, B01J 21/06, B01J 23/10

(54) **PROCEDE DE DECOMPOSITION DU N2O UTILISANT UN CATALYSEUR A BASE D'UN OXYDE DE CERIUM ET DE LANTHANE**
VERFAHREN ZUR ZERSETZUNG VON N20 MITHILFE EINES AUF EINEM CERIUM-LANTHAN-OXID BASIERENDEN KATALYSATORS
METHOD OF DECOMPOSING N2O USING A CATALYST BASED ON A CERIUM LANTHANUM OXIDE

(30) Priorité: 03.10.2008 FR 0805481
(43) Date de publication de la demande: 22.06.2011
(73) Titulaire: Rhodia Opérations, 93306 Aubervilliers (FR); Institut Régional des Matériaux Avancés, 56274 Ploemeur (FR)
(72) Inventeur: HAMON, Christian, F-44600 Saint-nazaire (FR); ROHART, Emmanuel, F-17220 Sainte Soulle (FR)
(74) Mandataire: Senninger, Thierry
(86) Numéro de dépôt international: PCT/EP2009/062490
(87) Numéro de publication internationale: WO 2010/037696

(56) Documents cités:
- EP-A- 1 504 805
- EP-B1- 0 789 621
- DE-A1-102007 038 711
- FR-A- 2 748 740
- FR-A- 2 847 830
- US-A1- 2009 041 645

## Description

La présente invention concerne un procédé de décomposition du N₂O dans lequel on utilise un catalyseur à base d'un oxyde de cérium et de lanthane.

On sait que le N₂O est un des gaz qui participent à l'effet de serre, effet que l'on cherche de plus en plus à diminuer dans le cadre de la lutte contre le réchauffement de la planète.

Or le N₂O se trouve en quantité importante dans les gaz émis par certaines installations industrielles comme celles de fabrication de l'acide nitrique ou de l'acide adipique. Pour éviter les rejets de N₂O, ces gaz sont traités de manière à décomposer le N₂O en oxygène et en azote avant d'être rejetés à l'atmosphère. Pour être efficace, ce traitement nécessite l'utilisation de catalyseurs.

Il existe déjà des catalyseurs pour ce type de traitement, par exemple des compositions à base des oxydes de magnésium ou de calcium, d'oxydes de nickel et de cobalt, d'oxydes de cuivre et de zinc ou encore des compositions à base d'oxydes de cérium et de cobalt ou d'oxydes de cérium et de zirconium.

Le problème des catalyseurs connus est qu'ils présentent une stabilité dans le temps qui est insuffisante.

L'objet de l'invention est de fournir un catalyseur de décomposition du N₂O qui présente une stabilité améliorée.

EP 1504805 et FR 2847830 décrivent chacun un catalyseur de décomposition de N₂O qui est différent du catalyseur de la revendication 1 car il contient du zirconium.

Dans ce but, le procédé de l'invention pour la décomposition du N₂O tel que décrit à la revendication 1 utilise un catalyseur consistant en un oxyde de cérium, un oxyde de lanthane, un oxyde d'un élément choisi parmi les terres rares autres que le cérium et le lanthane et éventuellement un oxyde d'un autre élément choisi parmi le cobalt, le fer, le cuivre et le zinc.

Les catalyseurs de l'invention présentent une stabilité améliorée même à des températures supérieures à 1000°C.

D'autres caractéristiques, détails et avantages de l'invention apparaîtront encore plus complètement à la lecture de la description qui va suivre, ainsi que des divers exemples concrets mais non limitatifs destinés à l'illustrer.

Par terre rare on entend pour la suite de la description les éléments du groupe constitué par l'yttrium et les éléments de la classification périodique de numéro atomique compris inclusivement entre 57 et 71.

On entend par surface spécifique, la surface spécifique B.E.T. déterminée par adsorption d'azote conformément à la norme ASTM D 3663-78 établie à partir de la méthode BRUNAUER - EMMETT- TELLER décrite dans le périodique "The Journal of the American Chemical Society, 60, 309 (1938)".

Les teneurs sont données en masse d'oxyde sauf indication contraire. Dans le catalyseur de l'invention, l'oxyde de cérium est sous forme d'oxyde cérique, les oxydes des autres terres rares sous forme Ln₂O₃, Ln désignant la terre rare, à l'exception du praséodyme exprimé sous la forme Pr₆O₁₁.

On précise aussi pour la suite de la description que, sauf indication contraire, dans toutes les gammes ou limites de valeurs qui sont données, les valeurs aux bornes sont incluses, les gammes ou limites de valeurs ainsi définies couvrant donc toute valeur au moins égale et supérieure à la borne inférieure et/ou au plus égale ou inférieure à la borne supérieure. En outre, les calcinations à l'issue desquelles sont données les valeurs de surface spécifique sont des calcinations sous air sauf indications contraires.

La terre rare autre que le cérium et le lanthane peut être le praséodyme, le néodyme, le gadolinium ou l'yttrium.

La proportion totale en élément lanthane et en terre rare autre que le cérium et le lanthane est généralement d'au plus 15% en masse d'oxyde de cet ou de ces éléments (lanthane + autre terre rare) par rapport à la masse totale du catalyseur. Cette proportion peut être plus particulièrement d'au plus 10%. La quantité minimale en lanthane et, éventuellement, en autre terre rare est généralement d'au moins 3% en masse d'oxyde. Dans le cas précis où le catalyseur comprend du lanthane avec au moins une autre terre rare, la teneur en lanthane est de préférence d'au moins 2% et d'au plus 10%. L'ensemble des valeurs mentionnées ci-dessus est donné à titre indicatif et non limitatif. Les valeurs minimales sont celles en dessous desquelles le catalyseur pourrait ne pas présenter une stabilité suffisante. Les valeurs maximales sont celles au-delà desquelles l'activité du catalyseur pourrait être insuffisante ou bien elles correspondent à des limites économiques.

Par ailleurs, le catalyseur de l'invention peut comprendre en outre au moins un autre élément choisi parmi le cobalt, le fer, le cuivre et le zinc. Cet autre élément est généralement présent dans le catalyseur sous la forme d'un oxyde. La proportion en ce ou ces autres éléments est généralement d'au plus 15% en masse d'oxyde de cet élément par rapport à la masse totale du catalyseur. La quantité minimale en cet élément lorsqu'il est présent dans le catalyseur de l'invention est de préférence d'au moins 1%.

Le catalyseur consiste en un oxyde à base de cérium, de lanthane et d'une ou plusieurs terres rares autres que le cérium et le lanthane avec éventuellement un autre élément choisi parmi le cobalt, le fer, le cuivre et le zinc. Le catalyseur ne contient que les oxydes des éléments précités et il ne contient pas d'oxyde d'un autre élément fonctionnel, c'est à dire susceptible d'avoir une influence positive sur la stabilité du catalyseur. Par contre, le catalyseur peut contenir des éléments tels que des impuretés pouvant notamment provenir de son procédé de préparation, par exemple des matières premières ou des réactifs de départ utilisés.

Selon un autre mode de réalisation intéressant de l'invention, le catalyseur se présente sous la forme d'une solution solide. Au sens de la présente description, on entend par « se présenter sous forme d'une solution solide », le fait que le catalyseur après calcination sous air, en présence d'eau (15% en volume), à une température de 1050°C et pendant 48 h présente une structure cristallographique de type solution solide. Dans ce cas, les diffractogrammes obtenus par diffraction des rayons X sur le catalyseur après calcination dans les conditions précitées ne révèlent, au sein de celui-ci, que l'existence d'une phase cristallographique unique.

Dans le cas de ce même mode de réalisation et pour les catalyseurs comprenant un autre élément choisi parmi le cobalt, le fer, le cuivre et le zinc, cet élément se trouve de préférence sous forme finement divisé dans le catalyseur, généralement à la surface de celui-ci, de sorte que la présence d'un oxyde de cet élément n'apparaît pas à l'analyse aux rayons X.

Dans le cas de ce mode de réalisation, les catalyseurs sous forme d'une solution solide présentent une activité catalytique améliorée.

Il est préférable d'utiliser à titre de catalyseur des oxydes présentant une surface spécifique importante à température élevée. Ainsi, le catalyseur peut avantageusement présenter une surface d'au moins 20 m²/g après calcination 6 h à 900°C sous air.

Les oxydes susceptibles d'être utilisés comme catalyseur pour la présente invention sont connus.

Pour les compositions à base d'oxydes de cérium, de lanthane et d'une autre terre rare on peut utiliser les produits décrits EP-0444470-A1 qui peuvent présenter à 900°C des surfaces adaptées à la présente invention.

On va décrire maintenant plus particulièrement une composition à base d'oxydes de cérium, de lanthane et d'une autre terre rare, qui présente une surface à haute température encore plus élevée et qui peut convenir tout particulièrement bien dans le cadre de la présente invention.

Cette composition spécifique ou particulière consiste en de l'oxyde de cérium, en de l'oxyde de lanthane et en au moins un oxyde d'une autre terre rare, et elle est caractérisée en ce qu'elle présente une surface spécifique d'au moins 20 m²/g après calcination à 1000°C pendant 5 h.

La composition considérée ne contient que les oxydes des éléments précités, cérium et autres terres rares et elle ne contient pas d'oxyde d'un autre élément susceptible d'avoir une influence positive sur la stabilité de la surface spécifique de la composition. Par contre, la composition peut contenir des éléments tels que des impuretés pouvant notamment provenir de son procédé de préparation, par exemple des matières premières ou des réactifs de départ utilisés.

Cette composition particulière peut présenter en outre une surface spécifique d'au moins 22 m²/g après calcination à 1000°C pendant 5 h. Plus généralement, des valeurs d'au moins environ 25 m²/g peuvent être obtenues dans les mêmes conditions de calcination.

La surface spécifique de cette même composition peut rester encore élevée même à une température encore plus importante. Ainsi, cette surface peut être d'au moins 10 m²/g, plus particulièrement d'au moins 14 m²/g après calcination à 1100°C pendant 5 h.

Cette même composition peut se caractériser aussi par sa porosité. Elle présente en effet, même à haute température, des porosités qui sont importantes et qui sont apportées par des pores dont la taille est d'au plus 200 nm. En d'autres termes, la composition présente une mésoporosité importante.

Les porosités indiquées dans la présente description sont mesurées par porosimétrie par intrusion de mercure conformément à la norme ASTM D 4284-03 (Standard method for determining pore volume distribution of catalysts by mercury intrusion porosimetry).

Plus précisément, la composition présente après calcination à 1000°C pendant 5 h, une porosité apportée par des pores de diamètre d'au plus 200 nm qui est d'au moins 0,15 cm³/g, plus particulièrement d'au moins 0,2 cm³/g. En outre, cette même composition peut présenter après calcination à 1000°C pendant 5 h, une porosité d'au moins 0,10 cm³/g, plus particulièrement d'au moins 0,15 cm³/g cette porosité étant apportée par des pores de diamètre d'au plus 50 nm.

Il faut aussi noter que cette composition spécifique présente des porosités sensiblement identiques après calcination à 900°C pendant 5 h. En d'autres termes, la porosité de la composition ne varie pratiquement pas après calcination à 900°C puis à 1000°C pendant 5 h. Ceci s'applique tout particulièrement à la porosité apportée par les pores d'au plus 200 nm. Dans ce cas, en effet, la diminution de la porosité est généralement d'au plus 10%, de préférence d'au plus 5%.

Le procédé de préparation de cette composition spécifique va maintenant être décrit.

Ce procédé est caractérisé en ce qu'il comprend les étapes suivantes :
- on forme un milieu liquide comprenant un composé du cérium;
- on chauffe le milieu à une température d'au moins 100°C;
- on sépare le précipité obtenu à l'issue de l'étape précédente du milieu liquide, on y ajoute des composés des autres terres rares (lanthane et la terre rare autre que le lanthane et le cérium) et on forme un autre milieu liquide;
- on chauffe le milieu ainsi obtenu à une température d'au moins 100°C;
- on amène le milieu réactionnel obtenu à l'issue du chauffage précédent à un pH basique;
- on sépare le précipité issu de l'étape précédente et on le calcine.

La première étape du procédé consiste donc à former un milieu liquide comprenant un composé du cérium.

Le milieu liquide est généralement l'eau.

Le composé du cérium est de préférence choisi parmi les composés solubles. Ce peut être notamment un sel d'acide organique ou inorganique comme un nitrate, un sulfate, un acétate, un chlorure, un nitrate céri-ammoniacal.

De préférence, on utilise du nitrate cérique. Il est avantageux d'utiliser des sels de pureté d'au moins 99,5% et plus particulièrement d'au moins 99,9%. Une solution aqueuse de nitrate cérique peut par exemple être obtenue par réaction de l'acide nitrique sur un oxyde cérique hydraté préparé d'une manière classique par réaction d'une solution d'un sel céreux, par exemple le nitrate céreux, et d'une solution d'ammoniac en présence d'eau oxygénée. On peut également, de préférence, utiliser une solution de nitrate cérique obtenue selon le procédé d'oxydation électrolytique d'une solution de nitrate céreux tel que décrit dans le document FR-A-2 570 087, et qui constitue ici une matière première intéressante.

On notera ici que les solutions aqueuses de sels de cérium peuvent présenter une certaine acidité libre initiale qui peut être ajustée par l'addition d'une base ou d'un acide. Il est cependant autant possible de mettre en oeuvre une solution initiale de sels de cérium présentant effectivement une certaine acidité libre comme mentionné ci-dessus, que des solutions qui auront été préalablement neutralisées de façon plus ou moins poussée. Cette neutralisation peut se faire par addition d'un composé basique au mélange précité de manière à limiter cette acidité. Ce composé basique peut être par exemple une solution d'ammoniac ou encore d'hydroxydes d'alcalins (sodium, potassium,...), mais de préférence une solution d'ammoniac.

On notera enfin que lorsque le mélange de départ contient du cérium essentiellement sous forme III, il est préférable de faire intervenir dans le cours du procédé un agent oxydant, par exemple de l'eau oxygénée.

Il est aussi possible d'utiliser un sol comme composé de départ du cérium. Par sol on désigne tout système constitué de fines particules solides de dimensions colloïdales, c'est à dire des dimensions comprises entre environ 1 nm et environ 500nm, à base d'un composé de cérium ce composé étant généralement un oxyde et/ou un oxyde hydraté de cérium, en suspension dans une phase liquide aqueuse, lesdites particules pouvant en outre, éventuellement, contenir des quantités résiduelles d'ions liés ou adsorbés tels que par exemple des nitrates, des acétates, des chlorures ou des ammoniums. On notera que dans un tel sol, le cérium peut se trouver soit totalement sous la forme de colloïdes, soit simultanément sous la forme d'ions et sous la forme de colloïdes.

Le mélange peut être indifféremment obtenu soit à partir de composés initialement à l'état solide que l'on introduira par la suite dans un pied de cuve d'eau par exemple, soit encore directement à partir de solutions de ces composés.

La seconde étape du procédé consiste à chauffer le milieu préparé à l'étape précédente à une température d'au moins 100°C.

La température à laquelle est chauffé le milieu est généralement comprise entre 100°C et 150°C, plus particulièrement entre 110°C et 130°C. L'opération de chauffage peut être conduite en introduisant le milieu liquide dans une enceinte close (réacteur fermé du type autoclave). Dans les conditions de températures données ci-dessus, et en milieu aqueux, on peut ainsi préciser, à titre illustratif, que la pression dans le réacteur fermé peut varier entre une valeur supérieure à 1 Bar (10⁵ Pa) et 165 Bar (1,65. 10⁷ Pa), de préférence entre 5 Bar (5. 10⁵ Pa) et 165 Bar (1,65. 10⁷ Pa). On peut aussi effectuer le chauffage dans un réacteur ouvert pour les températures voisines de 100°C.

Le chauffage peut être conduit soit sous air, soit sous atmosphère de gaz inerte, de préférence l'azote.

La durée du chauffage peut varier dans de larges limites, par exemple entre 30 minutes et 48 h, de préférence entre 1 et 5 h. De même, la montée en température s'effectue à une vitesse qui n'est pas critique, et on peut ainsi atteindre la température réactionnelle fixée en chauffant le milieu par exemple entre 30 minutes et 4 h, ces valeurs étant données à titre tout à fait indicatif.

On obtient à l'issue du chauffage un précipité qui est séparé du milieu liquide par tout moyen convenable, par exemple par soutirage des eaux mères. On ajoute au précipité ainsi séparé des composés des autres terres rares (lanthane et la terre rare autre que le lanthane et le cérium) en formant un second milieu liquide.

Ces composés de terre rare peuvent être de même nature que le composé de cérium utilisé dans la première étape du procédé. Ce qui a été décrit plus haut pour ce composé s'applique donc ici à ces composés de terre rare qui peuvent être plus particulièrement choisis parmi les nitrates, les sulfates, les acétates, les chlorures.

Dans une autre étape du procédé, le second milieu liquide est chauffé à une température d'au moins 100°C.

Là encore, ce qui a été décrit plus haut pour le premier chauffage s'applique de même ici pour le second chauffage.

A l'issue de ce second chauffage on amène le milieu réactionnel obtenu à un pH basique. Pour cela on introduit dans le milieu réactionnel un composé basique. On peut utiliser comme base ou composé basique les produits du type hydroxyde. On peut citer les hydroxydes d'alcalins ou d'alcalino-terreux. On peut aussi utiliser les amines secondaires, tertiaires ou quaternaires. Toutefois, les amines et l'ammoniac peuvent être préférés dans la mesure où ils diminuent les risques de pollution par les cations alcalins ou alcalino terreux. On peut aussi mentionner l'urée. Le composé basique peut être plus particulièrement utilisé sous forme d'une solution.

La valeur du pH à laquelle est amené le milieu peut être plus particulièrement comprise entre 8 et 10, plus particulièrement entre 8 et 9.

Dans une dernière étape du procédé, le précipité récupéré est ensuite calciné. Cette calcination permet de développer la cristallinité du produit formé et elle peut être également ajustée et/ou choisie en fonction de la température d'utilisation ultérieure réservée à la composition, et ceci en tenant compte du fait que la surface spécifique du produit est d'autant plus faible que la température de calcination mise en oeuvre est plus élevée. Une telle calcination est généralement opérée sous air, mais une calcination menée par exemple sous gaz inerte ou sous atmosphère contrôlée (oxydante ou réductrice) n'est bien évidemment pas exclue.

En pratique, on limite généralement la température de calcination à un intervalle de valeurs comprises entre 300°C et 1000°C.

En revenant maintenant, à l'issue de la description de la composition particulière précédente, à la description plus générale de l'invention, on notera que pour les catalyseurs comprenant un autre élément choisi parmi le cobalt, le fer, le cuivre et le zinc, ceux-ci peuvent être obtenus à partir des oxydes mixtes décrits précédemment en y incorporant ledit élément par toute technique connue de dépôt en surface notamment comme l'imprégnation à sec ou l'imprégnation humide.

L'oxyde doit avoir été mis en forme pour pouvoir être utilisé comme catalyseur dans l'application de l'invention.

Il peut ainsi se présenter par exemple sous forme d'extrudé ou de bille. L'oxyde ainsi mis en forme peut comprendre en outre un liant. Ce liant est choisi parmi ceux que l'on utilise habituellement dans les techniques d'extrusion, comme par exemple la silice, l'alumine, la boehmite, les argiles, les silicates, les silico-aluminates, le sulfate de titane, les fibres céramiques. Ces liants sont présents dans les proportions généralement utilisées c'est à dire jusqu'à environ 30%, plus particulièrement d'au plus environ 20% en poids.

Le catalyseur peut aussi être sous forme d'un revêtement (coating) à base de l'oxyde de l'invention sur un substrat céramique ou métallique.

Compte tenu de sa stabilité le catalyseur de l'invention peut être utilisé dans une large gamme de température et surtout à des températures élevées, notamment supérieures à 1000°C.

Le procédé de décomposition du N₂O de l'invention peut être mis en oeuvre tout particulièrement dans un procédé de préparation d'acide nitrique ou d'acide adipique.

Dans le cas particulier d'un procédé de préparation d'acide nitrique, le catalyseur peut être notamment utilisé en étant placé sous les toiles de platine du réacteur d'oxydation de l'ammoniac.

### Exemples

Des exemples vont maintenant être donnés.

On donne dans le tableau 1 ci-dessous, les caractéristiques des catalyseurs qui sont utilisés dans les exemples qui suivent.

Le catalyseur C0 est un catalyseur comparatif, les catalyseurs C1 à C3 sont des catalyseurs en-dehors de l'invention. Le catalyseur C4 illustre l'invention.

Les catalyseurs C1 à C3 ont été préparés selon l'enseignement de EP-0906244-A1 et par imprégnation des oxydes obtenus par une solution de cobalt.

Le catalyseur C4 a été préparé de la manière suivante. 201,6 ml d'une solution de nitrate cérique à au moins 90% mol d'ions cérium IV et contenant 50 g de CeO₂ sont neutralisés avec 5,7 ml d'une solution d'ammoniaque à 25% puis dilués avec 792,7 ml d'eau pure. Cette solution est ensuite chauffée à 100°C pendant 0,5 h. Après élimination des eaux-mères 6,1 ml d'une solution de nitrate de lanthane contenant 2,63 g de La₂O₃ et 5,3 ml d'une solution de nitrate de praséodyme contenant 2,63 g de Pr₆O₁₁ sont ajoutés au milieu. De l'eau pure est ajoutée pour amener le volume total de la solution à 1 litre. On procède ensuite comme dans l'exemple 1 pour obtenir une composition contenant 5% en masse de La₂O₃, 5% en masse de Pr₆O₁₁ et 90% en masse de CeO₂.

L'oxyde obtenu a été imprégné par une solution de cobalt.

Le traitement thermique a été effectué sous un mélange air + eau (15%) à la température et pendant la durée indiquées.

**Tableau 1**

| Référence | Composition (% masse d'oxydes) | Structure cristallographique après traitement thermique | |
|---|---|---|---|
| | | 950°C 6 heures | 1050°C 48 heures |
| C0 (en-dehors de l'invention) | CeO₂/ZrO₂ (58/42) | SS | MP |
| C1 (en-dehors de l'invention) | CeO₂/ZrO₂/La₂O₃/Pr₆O₁₁ (60/30/3/7) | SS | SS |
| C2 (en-dehors de l'invention) | 95% CeO₂/ZrO₂/La₂O₃/Pr₆O₁₁ (60/30/3/7) + 5% CO₃O₄ | SS | SS |
| C3 (en-dehors de l'invention) | 90% CeO₂/ZrO₂/La₂O₃/Pr₆O₁₁ (60/30/3/7) + 10% CO₃O₄ | SS | SS |
| C4 (selon l'invention) | 90% CeO₂/La₂O₃/Pr₆O₁₁ (90/5/5) + 10% CO₃O₄ | SS | SS |

| | | | |
|---|---|---|---|
| MP : mélange de phases SS : solution solide | | | |

### EXEMPLE 1

Cet exemple illustre les conversions en N₂O obtenus sur des catalyseurs après un traitement thermique à 850°C sous un mélange air + eau (15% en volume) pendant 1 mois.

La mise en forme des catalyseurs et les conditions expérimentales de leur utilisation sont identiques à celles décrites précédemment dans l'exemple 1.

Les résultats obtenus sont donnés dans le tableau ci-dessous.

| Catalyseur | Conversion N₂O (%) |
|---|---|
| C0 (comparatif) | 94 |
| C3 | 98 |
| C4 | 99 |

## Revendications

1. Procédé de décomposition du N₂O utilisant un catalyseur consistant en un oxyde de cérium, un oxyde de lanthane, un oxyde d'un élément choisi parmi les terres rares autres que le cérium et le lanthane et éventuellement un oxyde d'un autre élément choisi parmi le cobalt, le fer, le cuivre et le zinc, le catalyseur pouvant contenir des impuretés.

2. Procédé selon la revendication 1, **caractérisé en ce qu'**on utilise comme catalyseur une composition consistant en un oxyde de cérium, un oxyde de lanthane et un oxyde d'un élément choisi parmi les terres rares autres que le cérium et le lanthane qui présente une surface spécifique BET déterminée par adsorption d'azote établie conformément à la norme ASTM D 3663-78 d'au moins 20 m²/g après calcination à 1 000°C pendant 5 heures.

3. Procédé selon la revendication 2, **caractérisé en ce qu'**on utilise comme catalyseur une composition consistant en un oxyde de cérium, un oxyde de lanthane et un oxyde d'un élément choisi parmi les terres rares autres que le cérium et le lanthane qui présente, après calcination à 1000°C pendant 5 heures, une porosité apportée par des pores de diamètre d'au plus 200 nm qui est d'au moins 0,15 cm³/g, plus particulièrement d'au moins 0,2 cm³/g, la porosité étant mesurée par porosimétrie par intrusion de mercure conformément à la norme ASTM D 4284-03.

4. Procédé selon l'une des revendications précédentes, **caractérisé en ce qu'**on utilise un catalyseur dans lequel la terre rare autre que le cérium et le lanthane est le praséodyme, le néodyme, le gadolinium ou l'yttrium.

5. Procédé selon l'une des revendications précédentes, **caractérisé en ce qu'**on utilise un catalyseur dans lequel la proportion totale en élément lanthane et en terre rare autre que le cérium et le lanthane est d'au plus 15% en masse d'oxyde de ces éléments lanthane + autre terre rare par rapport à la masse totale du catalyseur.

6. Procédé selon la revendication 5, **caractérisé en ce que** le catalyseur comprend du lanthane dans une teneur d'au moins 2% et d'au plus 10%.

7. Procédé selon la revendication 1, **caractérisé en ce que** le catalyseur consiste en un oxyde de cérium, un oxyde de lanthane, un oxyde d'un élément choisi parmi les terres rares autres que le cérium et le lanthane et en au moins un autre élément choisi parmi le cobalt, le fer, le cuivre et le zinc pour laquelle la proportion en l'autre élément choisi parmi le cobalt, le fer, le cuivre et le zinc est d'au plus 15% en masse d'oxyde de cet élément par rapport à la masse totale du catalyseur.

8. Procédé selon l'une des revendications précédentes, **caractérisé en ce qu'**il est mis en oeuvre dans un procédé de préparation d'acide nitrique ou d'acide adipique.

9. Procédé selon la revendication 8 **caractérisé en ce que** le catalyseur utilisé dans le procédé de préparation d'acide nitrique est placé sous les toiles de platine du réacteur d'oxydation de l'ammoniac.

## Patentansprüche

1. Verfahren zur Zersetzung von N₂O unter Verwendung eines Katalysators, der aus einem Ceroxid, einem Lanthanoxid, einem Oxid eines Elements, das aus anderen Seltenerden als Cer und Lanthan ausgewählt ist, und gegebenenfalls einem Oxid eines anderen Elements, das aus Kobalt, Eisen, Kupfer und Zink ausgewählt ist, besteht, wobei der Katalysators Verunreinigungen enthalten kann.

2. Verfahren nach Anspruch 1, **dadurch gekennzeichnet, dass** man als Katalysator eine Zusammensetzung verwendet, die aus einem Ceroxid, einem Lanthanoxid und einem Oxid eines Elements, das aus anderen Seltenerden als Cer und Lanthan ausgewählt ist, besteht, der eine spezifische BET-Oberfläche, gemessen mittels Adsorption von Stickstoff, die gemäß der Norm ASTM D 3663-78 ermittelt wird, von mindestens 20 m²/g nach Kalzinierung bei 1000°C während 5 Stunden aufweist.

3. Verfahren nach Anspruch 2, **dadurch gekennzeichnet, dass** man als Katalysator eine Zusammensetzung verwendet, die aus einem Ceroxid, einem Lanthanoxid und einem Oxid eines Elements, das aus anderen Seltenerden als Cer und Lanthan ausgewählt ist, besteht, der nach Kalzinierung bei 1000°C während 5 Stunden eine durch Poren mit einem Durchmesser von höchstens 200 nm hervorgerufene Porosität aufweist, die mindestens 0,15 cm³/g, ganz besonders mindestens 0,2 cm³/g beträgt, wobei die Porosität mittels Quecksilberdruckporosimetrie gemäß der Norm ASTM D4284-03 gemessen wird.

4. Verfahren nach einem der vorhergehenden Ansprüche, **dadurch gekennzeichnet, dass** man einen Katalysator verwendet, in dem die andere Seltenerde als Cer und Lanthan Praseodym, Neodym, Gadolinium oder Yttrium ist.

5. Verfahren nach einem der vorhergehenden Ansprüche, **dadurch gekennzeichnet, dass** man einen Katalysator verwendet, in dem der Gesamtanteil des Elements Lanthan und der anderen Seltenerde als Cer und Lanthan höchstens 15 Massen-% an Oxid dieser Elemente Lanthan + andere Seltenerde, bezogen auf die Gesamtmasse des Katalysators, beträgt.

6. Verfahren nach Anspruch 5, **dadurch gekennzeichnet, dass** der Katalysator Lanthan in einem Gehalt von mindestens 2% und höchstens 10% umfasst.

7. Verfahren nach Anspruch 1, **dadurch gekennzeichnet, dass** der Katalysator aus einem Ceroxid, einem Lanthanoxid, einem Oxid eines Elements, das aus anderen Seltenerden als Cer und Lanthan ausgewählt ist, und aus mindestens einem anderen Element, das aus Kobalt, Eisen, Kupfer und Zink ausgewählt ist, besteht, wobei der Anteil des anderen Elements, das aus Kobalt, Eisen, Kupfer und Zink ausgewählt ist, höchstens 15 Massen-% an Oxid dieses Elements, bezogen auf die Gesamtmasse des Katalysators, beträgt.

8. Verfahren nach einem der vorhergehenden Ansprüche, **dadurch gekennzeichnet, dass** es bei einem Verfahren zur Herstellung von Salpetersäure oder Adipinsäure eingesetzt wird.

9. Verfahren nach Anspruch 8, **dadurch gekennzeichnet, dass** der bei dem Verfahren zur Herstellung von Salpetersäure verwendete Katalysator unter den Platinmetallnetzen des Ammoniakoxidationsreaktors platziert wird.

## Claims

1. Process for the decomposition of N₂O using a catalyst consisting of a cerium oxide, a lanthanum oxide, an oxide of an element chosen from the rare earth metals other than cerium and lanthanum and optionally an oxide of another element chosen from cobalt, iron, copper and zinc, it being possible for the catalyst to contain impurities.

2. Process according to Claim 1, **characterized in that** use is made, as catalyst, of a composition consisting of a cerium oxide, a lanthanum oxide and an oxide of an element chosen from the rare earth metals other than cerium and lanthanum which exhibits a BET specific surface, determined by nitrogen adsorption set up in accordance with Standard ASTM D 3663-78, of at least 20 m²/g after calcination at 1000°C for 5 hours.

3. Process according to Claim 2, **characterized in that** use is made, as catalyst, of a composition consisting of a cerium oxide, a lanthanum oxide and an oxide of an element chosen from the rare earth metals other than cerium and lanthanum which exhibits, after calcination at 1000°C for 5 hours, a porosity contributed by pores with a diameter of at most 200 nm which is at least 0.15 cm³/g, more particularly at least 0.2 cm³/g, the porosity being measured by mercury intrusion porosimetry in accordance with Standard ASTM D 4284-03.

4. Process according to one of the preceding claims, **characterized in that** use is made of a catalyst in which the rare earth metal other than cerium and lanthanum is praseodymium, neodymium, gadolinium or yttrium.

5. Process according to one of the preceding claims, **characterized in that** use is made of a catalyst in which the total proportion of element lanthanum and of rare earth metal other than cerium and lanthanum is at most 15% by weight of oxide of these elements lanthanum + other rare earth metal, with respect to the total weight of the catalyst.

6. Process according to Claim 5, **characterized in that** the catalyst comprises lanthanum in a content of at least 2% and of at most 10%.

7. Process according to Claim 1, **characterized in that** the catalyst consists of a cerium oxide, a lanthanum oxide, an oxide of an element chosen from the rare earth metals other than cerium and lanthanum and of at least one other element chosen from cobalt, iron, copper and zinc for which the proportion of the other element chosen from cobalt, iron, copper and zinc is at most 15% by weight of oxide of this element, with respect to the total weight of the catalyst.

8. Process according to one of the preceding claims, **characterized in that** it is employed in a process for the preparation of nitric acid or adipic acid.

9. Process according to Claim 8, **characterized in that** the catalyst used in the process for the preparation of nitric acid is placed under the platinum gauzes of the reactor for the oxidation of ammonia.
